Europäisches Patentamt

European Patent Office

Office européen des brevets

(11) Publication number: **0 047 082**
**B1**

# EUROPEAN PATENT SPECIFICATION

(45) Date of publication of patent specification: **07.11.84**

(21) Application number: **81303685.2**

(22) Date of filing: **13.08.81**

(51) Int. Cl.³: **G 21 C 21/12, B 23 K 20/02**

(54) **Method of production of cladding tube for nuclear fuel element.**

(30) Priority: **15.08.80 JP 111630/80**

(43) Date of publication of application:
**10.03.82 Bulletin 82/10**

(45) Publication of the grant of the patent:
**07.11.84 Bulletin 84/45**

(84) Designated Contracting States:
**DE SE**

(56) References cited:
**DE-A-2 164 639**
**DE-C- 451 203**
**FR-A-1 288 331**
**FR-A-2 287 303**
**US-A-4 198 740**

(73) Proprietor: **Hitachi, Ltd.**
**5-1, Marunouchi 1-chome**
**Chiyoda-ku Tokyo 100 (JP)**

(73) Proprietor: **SUMITOMO METAL INDUSTRIES, LTD.**
**15, Kitahama 5-chome Higashi-ku**
**Osaka-shi, Osaka, 541 (JP)**

(72) Inventor: **Imahashi, Hiromichi**
**15-22 Tagacho-3-chome**
**Hitachi-shi (JP)**
Inventor: **Kawahara, Akira**
**546-2 Funaishikawa Tokaimura**
**Naka-gun Ibaraki-ken (JP)**
Inventor: **Konishi, Takao**
**6, Suehirocho-4-chome**
**Nishinomiya-shi (JP)**
Inventor: **Morimoto, Yoshihumi**
**28-7-206 Koshiencho**
**Nishinomiya-shi (JP)**
Inventor: **Terui, Michio**
**Nippon Mining Ltd. 10-1 Toranomon-2-chome**
**Minato-ku Tokyo (JP)**
Inventor: **Yagi, Yoshio Central Laboratory of**
**Nippon Mining Co. Ltd. 17-35 Niizo-Minami-3-chome**
**Toda-shi Saitama-ken (JP)**

Courier Press, Leamington Spa, England.

(74) Representative: **Paget, Hugh Charles Edward et al**
**MEWBURN ELLIS & CO. 2/3 Cursitor Street London EC4A 1BQ (GB)**

## Description

This invention relates to fuel elements for nuclear reactors, and more particularly it deals with a method of producing a composite type cladding tube for a nuclear fuel element inner tube.

Nuclear fuel elements for forming a core of a modern power reactor each include nuclear fuel material contained in a cladding tube of high corrosion resistance, non reactivity and good thermal conductivity. Such fuel elements are arranged in an array in lattice form at regular intervals to provide a nuclear fuel assembly, and a suitable number of nuclear fuel assemblies form a conglomerate of a nuclear fission chain reaction type or a reactor core capable of carrying out self-maintaining nuclear fission. The reactor core is placed in a pressure vessel through which coolant flows.

The cladding is used for various purposes. One of its two main purposes is to prevent chemical reaction between nuclear fuel and coolant or between nuclear fuel and moderator. The second main purpose is to prevent radioactive nuclear fission products, which are in part gaseous, from leaking into the coolant or moderator from the fuel. Stainless steel or zirconium alloys are usually used for the cladding material.

When certain types of metal or alloy are used as the cladding material for producing and operating nuclear fuel elements, the cladding material undergoes mechanical and chemical reactions under specific conditions. This has caused a number of problems. Zirconium and its alloys are excellent nuclear fuel cladding materials under steady state operation conditions. This quality is attributed to the fact that zirconium and its alloys have a small neutron-absorption cross-section and are strong, ductile, very stable and non-reactive in the presence of pure water or steam, which is usually used as coolant and moderator in a nuclear reactor at a temperature below about 400°C.

However, such cladding materials have the problem that they become brittle due to interaction between the nuclear fuel, cladding and the nuclear fission products produced by the nuclear fission reaction, with a result that cracks tend to occur in the cladding. It has been ascertained that this behaviour of the cladding materials is promoted by mechanical stresses that are produced locally in the cladding due to the difference in thermal expansion between the fuel and cladding. During operation of a nuclear reactor, nuclear fission products are released from the nuclear fuel due to the fission reaction and exist on the surface of the cladding. In the presence of specific nuclear fission products such as iodine and cadmium etc. stress corrosion cracking occurs due to the action of local stresses and strain.

As disclosed in U.S. Patent No. 4,200,492 and GB—A—1525717 proposals have been made to provide various types of metallic liner between the fuel and cladding, to avoid this problem. Of all the metallic liners that have hitherto been proposed, the liner which is believed to be the most satisfactory is a coating of zirconium of a suitable purity provided as a lining on the inner wall surface of a zirconium alloy cladding tube. The thickness of the zirconium liner is about 5—30% that of the cladding tube. Zirconium, which is better able to remain in a soft state than zirconium alloys during irradiation by neutrons, has the effect of reducing local strain in the nuclear fuel element, thereby to protect the cladding tube from stress corrosion cracking and liquid metal embrittlement. The use of zirconium also has the advantages that it does not involve problems of neutron capture penalty, heat transfer penalty and incompatibility of material. Nickel or copper may be used instead of zirconium to provide a metallic liner.

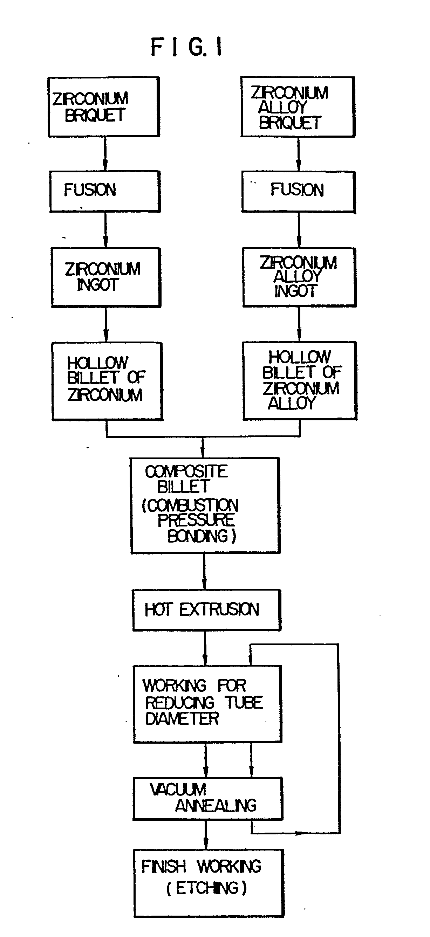

This type of composite cladding tube is usually produced by the following process. As shown in Fig. 1, a zirconium ingot for producing a metallic liner and a zirconium alloy ingot for producing cladding material are produced by the melting of briquettes. Then the ingots are subjected to heat treatment, forging and machining to form a second hollow billet of zirconium and a first hollow billet of zirconium alloy. The second hollow billet is inserted in the first hollow billet, and they are formed into a unitary structure either by explosion joining or diffusion joining, to provide a composite billet. The composite billet produced in this way is extruded by a standard hot extrusion process at a high temperature of about 550—750°C. Then the extruded composite tube is subjected to a standard tube making process by use of cold rolling, to provide a finished cladding tube of the desired dimensions.

It is necessary that a composite type cladding tube produced by the aforesaid process has the thickness of its zirconium liner controlled to the desired value and have its zirconium liner completely joined over its entire area to the cladding material in metallurgical bonding. To achieve this the second hollow billet (inner tube) of zirconium should be unitary with the first hollow billet (outer tube) of zirconium alloy when they are formed into a composite billet, and the composite billet should be deformed in unitary condition when subjected to extrusion and tube making working.

Thus it is desirable that, in order to obtain a cladding tube for a nuclear fuel element, in which tube a zirconium liner has a uniform and good join at the whole interface, a method of producing composite type cladding tube is achieved, including the above-mentioned process for obtaining a composite billet of a unitary structure.

According to the present invention, a method of producing a composite type cladding tube for a nuclear fuel element, comprises the steps of:

preparing a hollow outer billet of a nuclear fuel cladding material and a hollow inner billet of an outer diameter smaller than the inner diameter of the hollow outer billet;

inserting the hollow inner billet in the hollow outer billet;

expanding said inner billet to effect joining of the inner and outer billets into an integral hollow billet; and

working the integral hollow billet into a composite tube of the desired diameter and thickness;

characterized in that:

said step of expanding the inner billet is effected by inserting in the inner billet a resiliently deformable member which is longer than the inner billet and applying pressure to the resiliently deformable member in the axial direction of the billets in order to force the inner billet against the outer billet so as to form a pressure bond between the inner surface of the outer billet and the outer surface of the inner billet while preventing the resiliently deformable member from extrusion at regions outside the inner billet due to a change in the axial length of the inner billet, the interface of the inner and outer billets exposed at both axial ends of the pressure-bonded integral hollow billet is hermetically sealed, and

after said working of the integral hollow billet into the composite tube the outer and inner surfaces of the composite tube are polished.

A feature of the present invention is that the use of a resilient member as a pressing medium enables a force to be exerted uniformly on the inner tube both axially and circumferentially, because the pressing medium behaves in the same manner as a fluid. Also, control of the force may be readily effected so that it is possible to achieve pressure bonding of high reliability without causing deformation or any change in the thickness of the inner tube.

The present invention is based on a discovery made in the process of expanding a tube which is to be described hereinafter.

The load for expanding a tube can be obtained from the following equation:

$$W = PA_{r/n}$$

where
　W: tube expanding load (kg).
　P: tube expanding pressure (kg/cm²).
　$A_r$: cross-sectional area of tube expanding rubber member (mm²).
　n: tube expanding efficiency (0.85—0.9).

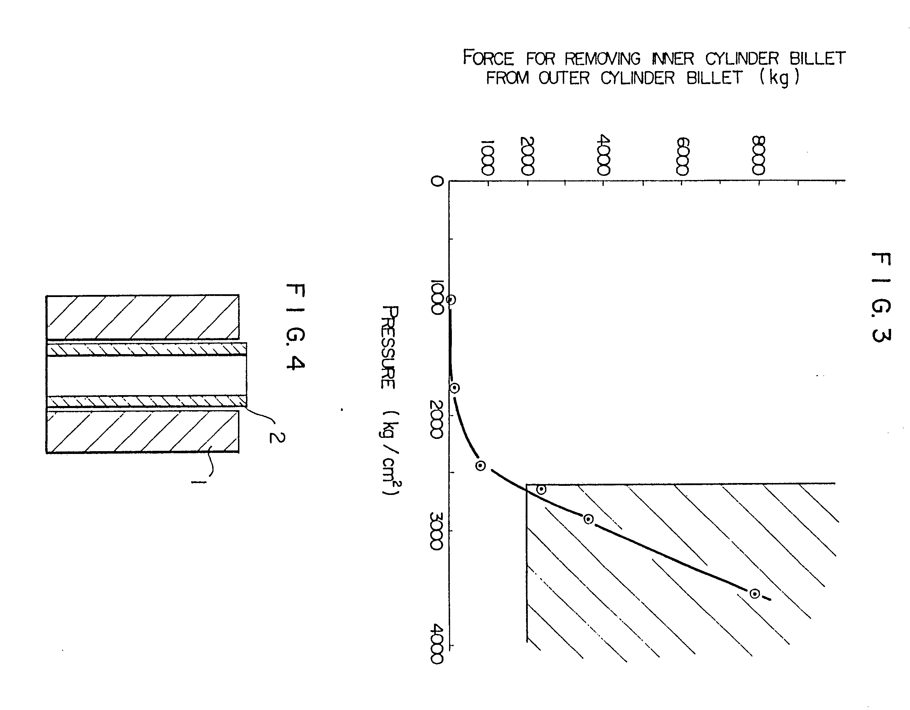

Fig. 3 shows the results of tests in which the relation between bonding strength measured by drawing, and the tube expanding pressure applied to the inner tube of zirconium according to equation (1) was investigated. It will be seen that the higher the tube expanding pressure, the higher becomes the bonding strength. The bonding strength measured by drawing refers to the load required to separate the inner tube from the outer tube of the composite tube after the composite has been produced by tube expansion. In producing a composite fuel cladding tube, it is preferable to increase the bonding strength because the composite billet obtained is subjected to hot extrusion and tube contraction working at a working rate of over 80%. Experiments were conducted by the inventors to determine the preferred lower limit of the bonding strength. The results obtained show that the bonding strength of a composite cladding billet should preferably be within the range indicated by hatching in Fig. 3.

Furthermore, the inventors of the present invention have found that, in order to control the thickness of a zirconium liner of a composite type cladding tube to a desired level, an important role is played by the ratio of the thickness of the inner member of zirconium to that of the outer member of zirconium alloy at the time of tube expansion. The thickness ratio is expressed by the following equation:

$$t = \frac{Z_r}{Z_{ry} + Z_r} \times 100 \ (\%),$$

where
　t: thickness ratio.
　$Z_r$: thickness of inner member of zirconium.
　$Z_{ry}$: thickness of outer member of zirconium alloy.

Experiments were conducted to investigate the tube expansion by varying the ratio of thickness of the inner member of zirconium to that of the outer member of zirconium alloy, and the final thickness ratio was obtained by producing a composite type cladding tube. The results showed that the thickness ratio at the final stage was lower by 5—10% than at the time of initial tube expansion. This is attributed to the fact that zirconium is easier to work or deform than zirconium alloys. Thus it has been ascertained that in order to obtain the desired thickness for the zirconium liner, the thickness ratio should preferably be increased by 5—10% at the time of the tube expansion as compared with the desired thickness ratio of the cladding tube obtained as a completed product.

Another characteristic of the present invention is that the interface between the inner and outer member of the composite billet is joined and hermetically sealed at opposite ends of the billet. Joining and sealing of the opposite ends of the cladding billet is preferably achieved by electron beam welding, preferably by electron beam welding in high vacuum. By subjecting the composite type cladding billet to electron beam welding to close the opposite ends of the inner and outer tubes, the inner and outer tubes are rendered unitary with greater precision and no residual air is present between the contacting surfaces of the two tubes so that joining of the two tubes is not prejudiced in any way by oxidation that might otherwise occur during subsequent hot extrusion. In electron beam welding, the degree of thermal effect caused by the welding can be minimised as compared with other welding techniques, so that the growth of grains of zirconium in the thermally affected zones into coarse grains is prevented. Such coarse grains might adversely affect the subsequent working and the characteristics of the tubes.

The present invention permits control of the thickness of the zirconium liner of the composite type cladding tube. As described above, it is necessary to control the thickness of a zirconium liner to the desired value, in order to produce a composite type cladding tube having high reliability of performance. This control is effected according to the present invention by polishing the inner surface of the cladding tube in a final finishing step.

Polishing of the inner surface may be carried out either mechanically by using a sand blast or chemical polishing by using a mixture of nitric acid and fluoric acid or by a combination of the two processes. By suitably controlling the operating conditions (pressure, flow velocity, flow rate, time, etc.), it is possible optimally to control the thickness of the inner wall surface of the zirconium liner by varying the amount of polishing of the inner surface. By performing polishing of the inner surface of the cladding tube, it is possible to obtain a smooth surface on the inner wall surface of the zirconium inner tube.

Thus the present invention is capable of providing a method of production of a composite type cladding tube having an increased precision in the thickness of the zirconium liner and an improved joining of the zirconium liner to the cladding over the entire area as compared with composite type cladding tubes produced by known methods.

Embodiments of the present invention will now be described, by way of example, with reference to the accompanying drawings in which:

Fig. 1 is a flow chart of a production process of the prior art and has already been discussed;

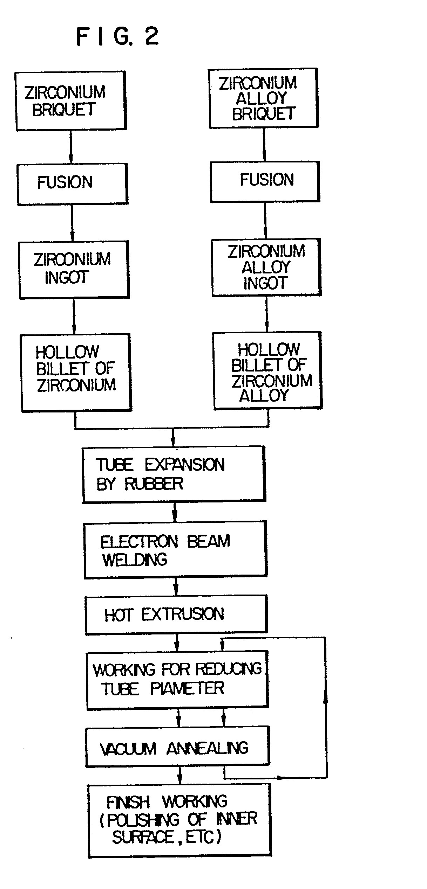

Fig. 2 is a flow chart of the production process comprising one embodiment of the present invention;

Fig. 3 is a diagrammatic representation of the conditions for tube expansion according to the present invention and has already been discussed;

Fig. 4 is a vertical sectional view of a composite billet according to the present invention prior to being subjected to tube expansion;

Fig. 5 is a vertical sectional view showing the manner in which tube expanding is carried out according to the present invention;

Fig. 6 is a vertical sectional view of a composite billet ready for hot extrusion working, completed by means of electron beam welding according to the present invention;

Fig. 7 is a photograph showing the microstructre of the cross-section of a part of the composite type cladding tube produced by the method according to the present invention; and

Fig. 8 is a sectional view showing a part of a composite type cladding tube in which nuclear fuel is inserted.

In the following description, methods of producing specific cladding tubes will be described in some detail. Standard zircalloy-2 conforming to ASTMB353 grade R60802 was melted by arc melting to produce a first hollow billet. A second hollow billet serving as a metallic liner was produced by melting sponge zirconium of high purity by arc melting to produce a pure zirconium ingot. The oxygen content was about 500 ppm.

The two ingots were subjected to hot forging; in particular the ingot of zircalloy-2 was hot-forged in B phase temperature range, and then the zircalloy-2 was subjected to solution heat treatment and the zirconium was subjected to annealing before both ingots were finished by a turning operation that they had predetermined dimensions. Table 1 shows the finished dimensions.

TABLE 1

| Specimen | Zircalloy-2 outer billet length×outer dia.×inner dia. (mm) | Zirconium inner billet length×outer dia.×inner dia. (mm) |
|---|---|---|
| 1 | 350.0×140.55×69.55 | 353.0×69.40×48.40 |
| 2 | 350.0×140.55×69.60 | 353.0×69.35×48.40 |

These two hollow billets were assembled into a composite billet as shown in Fig. 4 by inserting the second hollow billet (inner tube) 2 into the first hollow billet (first tube) 1. Fig. 5 shows a device for tube expansion and the manner in which the composite billet has its inner and outer tubes 1 and 2 joined to each other mechanically into a unitary structure. In the left half of Fig. 5 the composite billet is shown before it is expanded and the right half of Fig. 5 shows the composite billet after it is expanded. The device comprises bases 14, 15 held apart by nuts 16 on support members 13, a restraining frame 3, a resilient member 4 of silicone rubber serving as a pressing medium inserted in the billet, seal rings 5 of urethane rubber mounted at opposite ends of the resilient member 4, a pressure applying rod 6 for applying an axial compressive load to the resilient member 4, a hydraulic cylinder 7 connected to the pressure applying rod 6 and a pressing member 8 secured to a lower end plate 11 and disposed on one end of the inner tube 2. As the composite billet is clamped to the restraining member 3, the pressing member 8 is forced against the inner tube 2. While the composite billet is in this condition, the hydraulic cylinder 7 is actuated to apply an axial compressive load to the resilient member 4 to compress it axially, thereby to expand the inner tube 2 radially into metallurgical bonding with the outer tube 1. As the inner tube 2 expands radially, the pressing member 8 is moved by the biasing force of springs 10 mounted on the end plate 11 by fastening bolts 12 and washers 9 a distance corresponding to the axial contraction of the inner tube 2, thereby to avoid outward plastic flow of the resilient member 4 through the gap. One of the features of the method according to the invention is that the resilient member 4 has an axial length greater than that of the composite billet to enable the inner billet 2 to be joined uniformly to the outer billet 1 from one end of the billet to the other.

By using the aforesaid device, the specimens 1 and 2 of Table 1 were joined to each other by applying a tube expanding pressure of 3000 kg/cm$^2$ to provide composite billets. Tests showed that no deformation or non-uniformity of the thickness of the inner tube 2 had occurred in all the composite billets produced.

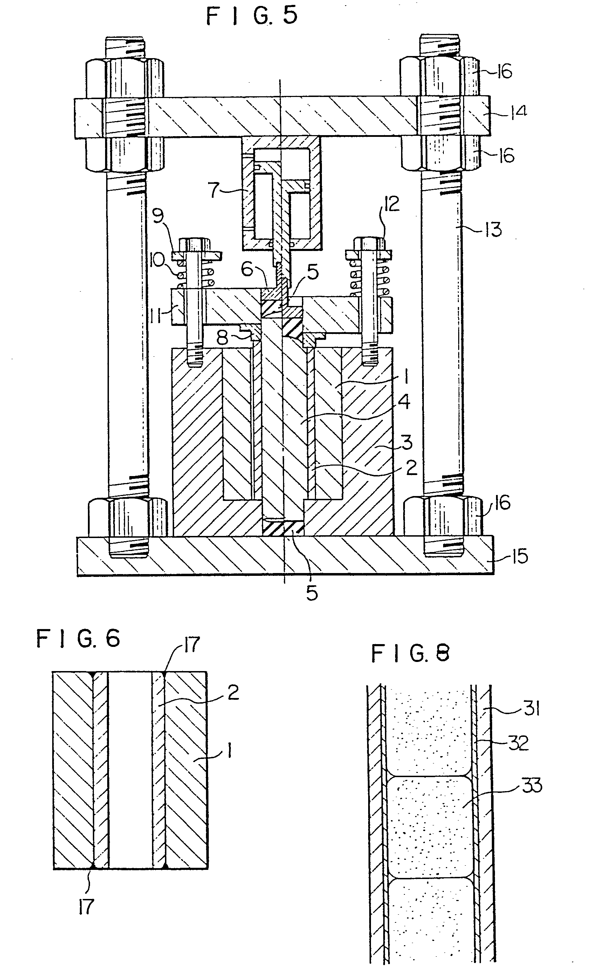

The composite billets mechanically joined as described above were each brought to a unitary structure by subjecting interfaces existing at opposite ends thereof to electron beam welding in high vacuum. Both specimens 1 and 2 shown in Table 1 were joined at opposite ends thereof by electron beam welding in a high vacuum of 6.7 to $8.0 \times 10^{-3}$ Nm$^{-2}$ (5 to $6 \times 10^{-5}$ Torr) with a depth of penetration of about 22 mm. Fig. 6 shows the welds 17 produced in this way.

Following electron beam welding, the whole of each composite billet was covered by copper layers by use of a copper inner tube of 3 mm in thickness inserted in contact with the interior of the composite billet, a copper outer tube of 2 mm in thickness on the outer periphery of the composite billet, and copper plates in contact with each end of the billet, all of which copper members were fixed to the composite billet by caulking. The composite billet covered by the copper layers was then subjected to hot extrusion under the following conditions, to provide an extruded tube: temperature of 700°C; extrusion ratio of 7.6; and extrusion speed of 75 mm/sec. The copper coating applied to the extruded tube was completely removed by the immersion of the extruded tube in a 50% aqueous solution of nitric acid.

Thereafter the composite billet was worked on by following standard process steps used for producing nuclear fuel cladding tubes. That is, the composite tube was subjected to cold rolling to reduce its diameter and its thickness, and then annealed in a high vacuum (0.13 to 0.013 Nm$^{-2}$) ($10^{-3}$ to $10^{-4}$ Torr) to recover its softness. In annealing the composite tube for recovering the softness thereof, the operation was performed at 650°C for 2 hours. The tube thus softened was subjected to further cold rolling. More specifically, the composite billet was cold-rolled at a reduction ratio of 51.2% in a first stage with the cold-rolled billet being annealed at 650°C for 2 hours, then the billet being cold-rolled at a reduction ratio of 72.5% in a second stage together with annealing at 650°C for 2 hours after cold rolling, then the billet was cold-rolled in a final stage at a reduction ratio of 86.6% to obtain predetermined dimensions and the final annealing in vacuum was effected at 580°C for 4 hours. The total reduction ratio was 98.2% and the rate of elongation of the billet was 55.5 times.

Following the final annealing, the cold-rolled tube was straightened and its entire length ground by means of sand blasting in the case of its inner surface and by means of centreless grinder in the case of its outer surface.

Then a mixture of nitric acid and fluorine was allowed to flow through the bore of the tube to effect chemical polishing of the inner surface thereof. A suitable length of time for performing the chemical polishing was selected to control the thickness of the inner member of zirconium of the composite tube.

Table 2 shows the measurements of the dimensions of the finished tube at the final stage and the thickness of the zirconium liner thereof.

TABLE 2

| Specimen | Inner diameter (mm) | Thickness (mm) | Thickness of zirconium shield ($\mu$m) | Total length of tube (mm) |
|---|---|---|---|---|
| 1 | 10.80 | 0.86 | 80±5 | 4000 |
| 2 | 10.80 | 0.86 | 80±5 | 4000 |

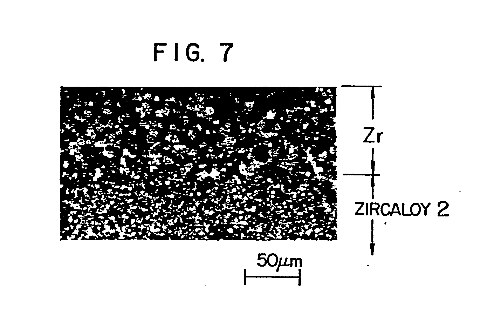

The zirconium layer 32 of the composite tube for a nuclear element 33 shown in Fig. 9 had a thickness of 80±5 $\mu$m along the entire length with sufficient precision. Ultrasonic wave tests and examination of the cross-section of the composite tube showed that the interface between the zirconium shield 32 and zircalloy cladding 31 was free from defects and represented good metallurgical bonding along the entire length. Fig. 7 is a photograph showing the microstructure of the section of a part of the tube of specimen 1 shown in Table 2 in which the lower $\frac{1}{3}$ of the tube in the photograph is constituted by zircalloy-2, which is finer in structure than the upper portion of the tube constituted by zirconium.

In the example shown and described above, sponge zirconium of high purity has been used as a metallic liner. It is to be understood that the invention is not limited to this specific material for the metal liner and that the sponge zirconium containing different amounts of impurities and other pure zirconium obtained from zirconium of crystal rod by use of an iodine process may be used with the same results. In the example shown and described hereinabove, copper has been described as being used for applying a coating to the composite tube. The invention is not limited to the use of this metal and any lubricant may be used in place of copper.

From the foregoing description, it will be appreciated that the method of production of a composite type cladding tube having a zirconium liner according to the invention may enable the following advantages to be obtained:

(1) By effecting control of the dimensions of the composite billet and by effecting control of the thickness of the zirconium liner when the step of imparting finish polishing to the inner surface of the composite tube, it is possible to increase the precision with which the thickness of the metallic liner is controlled.

(2) The interface between the zirconium liner and the zircalloy cladding of the composite billet can be maintained in a clean condition without being oxidized at the time of hot extrusion, so that good metallurgical bonding can be achieved by diffusion between the metallic liner and the cladding.

(3) A composite type cladding tube can be produced so long as its diameter is above 10 mm, even if its inner diameter is small.

(4) The method requires a shorter period of time than methods of the prior art regarding the working, and satisfactory control of operation conditions can be readily effected.

(5) The regions affected thermally when welding is performed are very small, so that local changes in material can be neglected.

(6) The need to subject the composite billet to diffusion treatment by maintaining it at elevated temperatures for prolonged periods is eliminated, and the nuclear fuel cladding tube obtained is highly reliable in performance.

**Claims**

1. A method of producing a composite type cladding tube for a nuclear fuel element, comprising the steps of:

preparing a hollow outer billet (1, Fig. 4) of a nuclear fuel cladding material and a hollow inner billet (2, Fig. 4) of an outer diameter smaller than the inner diameter of the hollow outer billet;

inserting the hollow inner billet in the hollow outer billet;

expanding said inner billet to effect joining of the inner and outer billets into an integral hollow billet (1, 2, Fig. 6); and

working the integral hollow billet into a composite tube of the desired diameter and thickness;

characterised in that:

said step of expanding the inner billet is effected by inserting in the inner billet a resiliently deformable member (4) which is longer than the inner billet and applying pressure to the resiliently deformable member in the axial direction of the billets in order to force the inner billet against the outer billet so as to form a pressure bond between the inner surface of the outer billet and the outer surface of the inner billet while preventing (9, 10, 11, 12) the resiliently deformable member from extrusion at regions outside the inner billet due to a change in the axial length of the inner billet,

the interface of the inner and outer billets exposed at both axial ends of the pressure-bonded integral hollow billet is hermetically sealed (17, Fig. 6), and

after said working of the integral hollow billet into the composite tube the outer and inner surfaces of the composite tube are polished.

2. A method according to Claim 1, wherein

said hollow outer billet (1) and said hollow inner billet (2) are prepared by forging, heat treatment and machining, said hollow inner billet having a length slightly greater than that of the hollow outer billet; and

said working of the integral hollow billet is effected by subjecting it to hot extrusion after applying a coating acting as a lubricant onto its surface, and cold working the hot-extruded billet into the composite tube, after the removal of the coating, by repeated cold working and heat treatment of said billet.

3. A method according to Claim 1 or Claim 2, wherein said hollow inner billet (2) is formed of zirconium.

4. A method according to any one of Claims 1 to 3, wherein said hollow outer billet (1) is formed of zirconium alloy.

5. A method according to Claim 4, wherein an ingot of zirconium alloy is heated to a $\beta$ phase, forged, subjected to heat solution treatment and machining, to produce the outer hollow billet.

6. A method according to any one of the preceding claims wherein said resiliently deformable member (4) is formed of silicone rubber.

7. A method according to any one of the preceding claims wherein the said hermetic sealing of the interface of the inner and outer billets is effected by electron beam welding.

8. A method according to any one of the preceding claims wherein the ratio of the thickness of the hollow inner billet to the thickness of the hollow outer billet is greater by 5—10% than the corresponding ratio of the thickness of the inner member to the thickness of the outer member of the composite type cladding tube finally produced.

9. A method according to any one of the preceding claims wherein the pressure applied to the resiliently deformable member is more than 2600 kg/cm².

10. A method according to any one of the preceding claims wherein the inner billet is pressure bonded to the outer billet in vacuo or in an inert gas atmosphere.

11. A method according to any one of the preceding claims wherein the polishing of the inner and outer surfaces of the composite tube is effected chemically or mechanically to smoothen the inner surface of the inner liner thereof and the control of the thickness of the inner liner.

**Patentansprüche**

1. Herstellungsverfahren eines zusammengesetzten, geschichteten Rohres für ein Kernbrennstoffelement mit folgenden Verfahrensschritten:

Anfertigen eines hohlen äußeren Rohlings (1, Fig. 4) aus einem Kernbrennstoff-Hüllenmaterial und eines hohlen inneren Rohlings (2, Fig. 4) mit einem Außendurchmesser, der kleiner als der Innendurchmesser des hohlen äußeren Rohlings ist;

Einsetzen des hohlen inneren Rohlings in den hohlen äußeren Rohling;

Expandieren des inneren Rohlings, um eine Verbindung des inneren und des äußeren Rohlings zu einem einstückigen hohlen Rohling (1, 2, Fig. 6) zu bewirken und

Verarbeiten des einstückigen hohlen Rohlings zu einem Verbundrohr von gewünschtem Durchmesser und Dicke,

dadurch gekennzeichnet, daß

der Schritt des Expandierens des inneren Rohlings ausgeführt wird, indem in den inneren Rohling ein elastisch verformbares Teil (4) eingesetzt wird, welches länger ist als der innere Rohling, und indem in axialer Richtung der Rohlinge Druck auf das elastisch verformbare Teil ausgeübt wird um den inneren Rohling gegen den äußeren Rohling zu treiben, so daß eine Druckverbindung zwischen der inneren Oberfläche des äußeren Rohlings und der äußeren Oberfläche des inneren Rohlings gebildet wird, wobei man verhindert (9, 10, 11, 12), daß das elastisch verformbare Teil aufgrund einer Änderung der axialen Länge des inneren Rohlings einer Extrusion in Gebieten außerhalb des inneren Rohlings unterliegt,

daß die Berührungsfläche zwischen dem inneren und dem äußeren Rohling, die an den beiden Enden des druckverbundenen einstückigen hohlen Rohlings freiliegt, hermetisch abgedichtet wird (17, Fig. 6), und daß

nach dem Verarbeiten des einstückigen hohlen Rohlings zu dem Verbundrohr die innere und die äußere Oberfläche des Verbundrohres poliert werden.

2. Verfahren nach Anspruch 1, bei dem der hohle äußere Rohling (1) und der hohle innere Rohling (2) durch Schmieden, Wärmebehandlung und mechanische Bearbeitung angefertigt werden, wobei der hohle innere Rohling eine Länge besitzt, die etwas größer ist als die des hohlen äußeren Rohlings,

und bei dem die Bearbeitung des einstückigen hohlen Rohlings ausgeführt wird, indem er nach dem Aufbringen einer als Schmiermittel wirkenden Schicht auf seine Oberfläche einer heißen Extrusion und nach dem Entfernen der Schicht der heißextrudierte Rohling kalt zu dem Verbundrohr weiterverarbeitet wird, wobei die Kaltbearbeitung und die Wärmebehandlung des Rohlings wiederholt ausgeführt werden.

3. Verfahren nach Anspruch 1 oder 2, bei dem der hohle innere Rohling (2) aus Zirkon gebildet wird.

4. Verfahren nach einem der Ansprüche 1 bis 3, bei dem der hohle äußere Rohling (1) aus einer Zirkonlegierung gebildet wird.

5. Verfahren nach Anspruch 4, bei dem ein Block aus einer Zirkonlegierung zur Herstellung des äußeren hohlen Rohlings in eine $\beta$-Phase erhitzt wird, geschmiedet wird, einer Behandlung mit heißer Lösung unterzogen und mechanisch bearbeitet wird.

6. Verfahren nach einem der vorangehenden Ansprüche, bei dem das elastich verformbare Teil (4) aus Silicongummi gebildet ist.

7. Verfahren nach einem der vorangehenden Ansprüche, bei dem das hermetische Abdichten der Berührungsfläche zwischen dem inneren und dem äußeren Rohling mit Elektronenstrahlschweißen ausgeführt wird.

8. Verfahren nach einem der vorangehenden Ansprüche, bei dem das Verhältnis der Dicke des hohlen inneren Rohlings zu der Dicke des hohlen äußeren Rohlings um 5 bis 10% größer ist als das entsprechende Verhältnis der Dicke des inneren Teiles zu der Dicke das am Ende erzeugten geschichteten Verbundrohres.

9. Verfahren nach einem der vorangehenden Ansprüche, bei dem der auf das elastisch verformbare Teil ausgeübte Druck mehr als 2 600 kg/cm² beträgt.

10. Verfahren nach einem der vorangehenden Ansprüche, bei dem der innere Rohling im Vakuum oder in einer Atmosphäre aus Inertgas durch Druck mit dem äußeren Rohling verbunden wird.

11. Verfahren nach einem der vorangehenden Ansprüche, bei dem das Polieren der inneren und äußeren Oberfläche des Verbundrohres chemisch oder mechanisch ausgeführt wird, um die innere Oberfläche von seinem inneren Einlegerohr zu glätten und die Dicke das inneren Einlegerohres einzustellen.

## Revendications

1. Méthode de production d'un tube plaqué du type composé pour élément de combustion nucléaire, comprenant les étapes de:

préparer un billette externe creuse (1, figure 4) d'un matériau de placage de combustible nucléaire et une billette interne creuse (2, figure 4) d'un diamètre externe plus petit que le diamètre interne de la billette externe creuse;
insérer la billette interne creuse dans la billette externe creuse;

dilater ladite billette interne pour effectuer la jonction des billettes interne et externe en une bille creuse en une pièce (1, 2, figure 6); et
travailler la billette creuse en une pièce en un tube composé du diamètre et de l'épaisseur souhaités;

caractérisée en ce que:

ladite étape de dilater la billette interne est effectuée en insérant, dans la billette interne, un organe élastiquement déformable (4) qui est plus long que la billette interne et en appliquant de la pression à l'organe élastiquement déformable en direction axiale des billettes afin de forcer la billette interne contre la billette externe pour former une jonction de pression entre la surface interne de la billette externe et la surface externe de la billette interne tout en empêchant (9, 10, 11, 12) l'organe élastiquement déformable de s'extruder en des régions en dehors de la billette interne du fait d'un changement de la longueur axiale de la billette interne,
l'interface des billettes interne et externe exposée aux deux extrémités axiales de la billette creuse en une pièce liée par pression est hermétiquement scellée (17, figure 6), et
après ledit travail de la billette creuse en une pièce en un tube composé, les surfaces externe et interne du tube composé sont polies.

2. Méthode selon la revendication 1, où ladite bilette externe creuse (1) et ladite billette interne creuse (2) sont préparées en forgeant, en traitant thermiquement et en usinant ladite billette interne creuse ayant une longueur légèrement supérieure à celle de ladite billette externe creuse, et

ledit travail de la billette creuse en une pièce est effectué en la soumettant à une extrusion à chaud après application dd'un revêtement servant de lubrifiant sur sa surface, et en travaillant à froid la billette extrudée à chaud en tube composé, après l'enlèvement du revêtement, par répétition du travail à froid et du traitement thermique de ladite billette.

3. Méthode selon la revendication 1 ou la revendication 2, où ladite billette interne creuse (2) est formée de zirconium.

4. Méthode selon l'une quelconque des revendications 1 à 3, où ladite billette externe creuse (1) est formée en alliage de zirconium.

5. Méthode selon la revendication 4, où un lingot d'alliage de zirconium est chauffé à une phase $\beta$, est forgé, soumis à un traitement thermique en solution et à un usinage, pour produire la billette creuse externe.

6. Méthode selon l'une quelconque des revendications précédentes, où ledit organe élastiquement déformable (4) est formé de caoutchouc de silicone.

7. Méthode selon l'une quelconque des revendications précédentes, où ledit joint hermétique de l'interface des billettes interne et externe est effectué par une soudure au faisceau d'électrons.

8. Méthode selon l'une quelconque des revendications précédentes, où le rapport de l'épaisseur de la billette interne creuse à l'épaisseur de la billette externe creuse est supérieur de 5 à 10% au rapport correspondant de l'épaisseur de l'organe interne à l'épaisseur de l'organe externe du tube plaqué du type composé finalement produit.

9. Méthode selon l'une quelconque des revendications précédentes, où la pression appliquée à l'organe élastiquement déformable est supérieure à 2.600 kg/cm².

10. Méthode selon l'une quelconque des revendications précédentes, où la billette interne est jointe par pression à la billette externe sous vide ou dans une atmosphère d'un gaz inerte.

11. Méthode selon l'une quelconque des revendications précédentes, où le polissage des surfaces interne et externe du tube composé est effectué chimiquement ou mécaniquement pour lisser la surface interne de son revêtement interne et pour le contrôle de l'épaisseur du revêtement interne.

# F I G. I

# F I G. 2

F I G. 3

FORCE FOR REMOVING INNER CYLINDER BILLET
FROM OUTER CYLINDER BILLET (kg)

8000

6000

4000

2000

1000

0        1000      2000      3000      4000

PRESSURE (kg / cm²)

F I G. 4

2

1

## F I G. 5

## F I G. 6

## F I G. 8

4

# FIG. 7

Zr

ZIRCALOY 2

50μm